(19) Europäisches Patentamt
European Patent Office
Office européen des brevets

(11) Numéro de publication : **0 396 444 B1**

(12) # FASCICULE DE BREVET EUROPEEN

(45) Date de publication du fascicule du brevet : **16.06.93 Bulletin 93/24**

(51) Int. Cl.[5] : **C08F 214/22,** C09D 127/16, // (C08F214/22, 214:18, 216:14)

(21) Numéro de dépôt : **90401059.2**

(22) Date de dépôt : **19.04.90**

(54) **Copolymère durcissable fluoré, son procédé de fabrication et son application dans les vernis et peintures.**

(30) Priorité : **28.04.89 FR 8905730**

(43) Date de publication de la demande : **07.11.90 Bulletin 90/45**

(45) Mention de la délivrance du brevet : **16.06.93 Bulletin 93/24**

(84) Etats contractants désignés : **AT BE CH DE DK ES FR GB GR IT LI LU NL SE**

(56) Documents cités :
**GB-A- 2 163 756**
**GB-A- 2 189 794**

(73) Titulaire : **ELF ATOCHEM S.A.**
**4 & 8, Cours Michelet La Défense 10**
**F-92800 Puteaux (FR)**

(72) Inventeur : **Kappler, Patrick**
**4 Chemin de Fontville**
**F-69130 Ecully (FR)**
Inventeur : **Perillon, Jean-Luc**
**18 Lot Bois Taillefer**
**F-27300 Bernay (FR)**

(74) Mandataire : **Foiret, Claude et al**
**ELF ATOCHEM S.A. Département Propriété Industrielle La Défense 10 - Cedex 42**
**F-92091 Paris-La-Défense (FR)**

EP 0 396 444 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un copolymère durcissable fluoré de fluorure de vinylidène ($C_2H_2F_2$), d'au moins un autre monomère fluoré choisi parmi le tétrafluoroéthylène ($C_2F_4$), le chlorotrifluoroéthylène ($C_2F_3Cl$), l'hexafluoropropène ($C_3F_6$), et d'un éther allylique hydroxylé et/ou époxydé. Ce copolymère soluble dans les solvants organiques est particulièrement recommandé pour la fabrication de peintures et vernis.

Les polymères fluorés sont connus pour leurs bonnes propriétés mécaniques et leur excellente résistance aux produits chimiques et aux intempéries. Toutefois leur insolubilité dans les solvants classiques les rend inutilisables pour certaines applications dont par exemple celle de résine pour peintures et vernis où leurs propriétés sont recherchées pour la fabrication de revêtements de bonne résistance et d'entretien facile.

Afin de profiter des propriétés des polymères fluorés tout en évitant leurs inconvénients des moyens ont été recherchés pour les rendre solubles dans les solvants organiques classiques. Pour ce faire il est connu de diminuer la cristallinité des polymères fluorés par copolymérisation de monomères éthyléniquement insaturés dont un au moins est fluoré.

En outre pour utiliser de tels copolymères il est souhaitable pour certaines applications, en particulier par leur emploi dans la fabrication des peintures et vernis, de leur conserver un degré suffisant de rigidité et de les rendre durcissables par incorporation dans leur structure de groupes fonctionnels.

De tels copolymères durcissables fluorés sont décrits dans les FR 2 597 873 et 2 569 703. Ces produits sont obtenus par copolymérisation de chlorotrifluoroéthylène, d'ester d'acide gras et d'allylglycidyléther hydroxylé ou éthoxylé. Ces copolymères peuvent éventuellement contenir moins de 20 % d'un autre comonomère non fluoré. Si ces copolymères contiennent plus de 20 % du comonomère précédent ils perdent de leur solubilité dans les solvants et de leur transparence. En outre, l'introduction de fluor par l'intermédiaire du seul $C_2F_3Cl$ amène également l'atome de chlore qui n'est pas désirable en grande quantité pour les propriétés optiques et de résistance à la corrosion.

Dans le JP 59-174657/84 est également décrit un copolymère durcissable à base de fluorure de vinylidène, de tétrafluoroéthylène, de chlorotrifluoroéthylène, d'un ester vinylique et d'un agent d'hydroxylation. Ce copolymère contenant moins de 45 % du groupement de fluorure de vinylidène et à base d'ester vinylique présente l'inconvénient de fournir après hydrolyse une solution de copolymère assez fortement colorée qui nuit à la transparence des vernis réalisés ultérieurement à partir de ce produit.

La présente invention a pour objet un copolymère fluoré facilement durcissable à chaud en présence éventuellement d'un agent durcissant. Ce copolymère en solution dans un solvant adapté à cette application peut être utilisé en tant que peinture ou vernis pour former des revêtements durs, stables et transparents en absence de pigments et possédant une excellente adhérence sur les métaux, le verre, le bois, le ciment, les matières plastiques etc....

Le copolymère durcissable selon l'invention contenant les restes de copolymérisation d'un monomère fluoré et d'un éther allylique hydroxylé et/ou époxydé est caractérisé en ce que :

- les restes de monomère fluoré proviennent de l'association de fluorure de vinylidène et d'un autre monomère fluoré choisi parmi le tétrafluoroéthylène, le chlorotrifluoroéthylène, l'hexafluoropropène et le mélange d'au moins deux de ces trois monomères
- et en ce que l'éther allylique est choisi parmi les composés de formule :

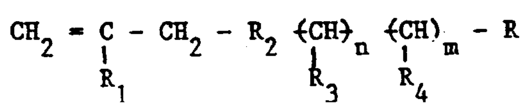

R étant : $CH_2OH$ ou

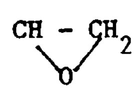

$R_1$ étant : H ou $CH_3$
$R_2$ étant : O-(X)p,

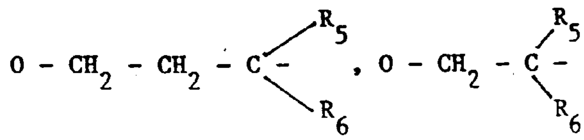

avec "p" un nombre choisi de 0 à 3
et X = $(CH_2)_q$-O avec "q" un nombre choisi de 1 à 3
$R_5$ et $R_6$ identiques ou différents étant H, $CH_2OH$, $CH_2$-$CH_2$-OH, $CH_3$
$R_3$ et $R_4$ identiques ou différents étant H ou OH
et "n" et "m", identiques ou différents étant des nombres choisis de 0 à 2.

L'association pour 100 moles de l'ensemble des monomères fluorés est formée de :

- 50 à 98 moles de fluorure de vinylidène et de
- 2 à 50 moles de l'autre monomère fluoré tel que défini.

Le copolymère durcissable fluoré selon l'invention est caractérisé en ce qu'il comprend les restes des monomères provenant de :

- 50 à 98 moles et mieux de 70 à 85 moles de fluorure de vinylidène
- 2 à 50 moles et mieux de 15 à 20 moles de monomère fluoré choisi parmi le tétrafluoroéthylène, le chlorotrifluoroéthylène, l'hexafluoropropène, et le mélange d'au moins deux de ces trois monomères
- 2 à 20 moles et mieux de 5 à 10 moles de l'éther allylique précédent pour 100 moles de l'ensemble des monomères fluorés.

Parmi les éthers allyliques préférés peuvent être cités les composés de formule :

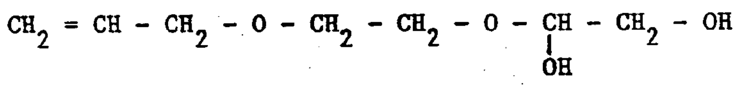

$CH_2 = CH - CH_2 - O - CH_2 - CH_2 - OH$
$CH_2 = CH - CH_2 - O - CH_2 - CH_2 - CH_2 - OH$
$CH_2 = CH - CH_2 - O - CH_2 - CH_2 - CH_2 - CH_2 - OH$
$CH_2 = CH - CH_2 - O - CH_2 - CH_2 - O - CH_2 - CH_2 - OH$
$CH_2 = CH - CH_2 - O - CH_2 - CH_2 - O - CH_2 - CH_2 - O - CH_2-CH_2 - OH$

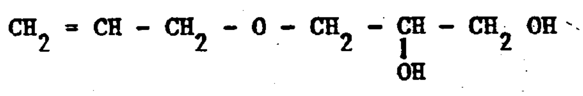

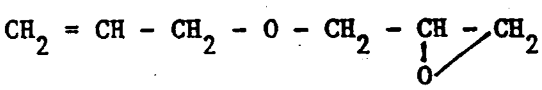

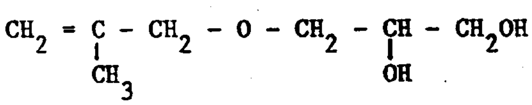

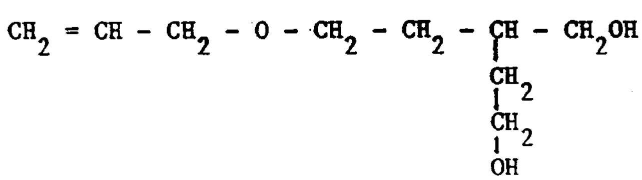

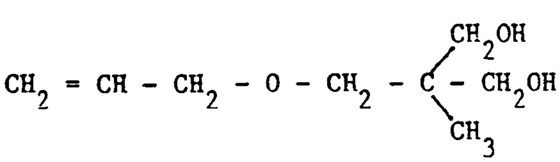

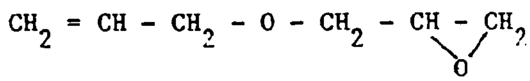

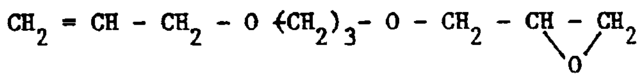

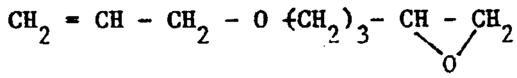

Afin de pouvoir utiliser ces copolymères dans une composition liquide de revêtement telle que peinture ou vernis il est recommandé que la viscosité inhérente du copolymère dissous dans la diméthyleformamide à 25°C à une concentration de 1 g/dl soit comprise entre les valeurs de 0,03 à 0,4 dl/g.

Le copolymère selon l'invention est principalement obtenu selon le procédé connu de polymérisation en solution. Le procédé consiste à copolymériser les monomères, en milieu solvant de l'ensemble des monomères en présence d'un initiateur organosoluble, à une température comprise entre environ 30 et 120°C et de préférence entre 40 et 80°C sous une pression d'environ 10 à 80 bars et de préférence entre 15 et 40 bars.

Selon l'invention le copolymère durcissable est obtenu par copolymérisation de fluorure de vinylidène, d'au moins un des monomères fluorés choisis parmi le tétrafluoroéthylène, le chlorotrifluoréthylène et l'hexafluoropropène, et, d'éther allylique tel que défini précédemment. Pour 100 moles de monomères fluorés polymérisés sont utilisées :

- 50 à 98 moles de fluorure de vinylidène
- 2 à 50 moles de tétrafluoroéthylène ou de chlorotrifluoroéthylène ou d'hexafluoropropène ou d'un mélange d'au moins deux des trois monomères

  auxquelles sont associées de l'éther allylique tel que déjà défini.

Afin d'obtenir un copolymère durcissable possédant les meilleures propriétés, on associe de 2 à 20 moles d'éther allylique tel que défini pour 100 moles de l'ensemble des monomères fluorés.

Selon un mode de copolymérisation préféré le solvant est chauffé à la température de réaction choisie dans un réacteur agité préalablement degazé. Un mélange de monomère fluoré ainsi qu'une fraction initiale d'éther allylique sont introduits dans le réacteur.

La quantité de mélange de monomère à introduire pour atteindre la pression de réaction choisie dépend des conditions de solubilité des monomères fluorés dans le solvant choisi. Le rapport pondéral monomère/solvant est en général compris entre 0,1 et 1.

Lorsque la pression de réaction et la température de réaction sont atteintes on introduit dans le réacteur l'initiateur de la polymérisation. La formation de polymère se traduit par une baisse de pression que l'on compense par l'ajout de mélange de monomère fluorés.

On peut ajouter un mélange de monomères fluorés de composition molaire identique à celle que l'on a introduite au départ. On peut également tenir compte des réactivités propres de chaque comonomère et ajuster la composition du mélange rajouté au cours de la polymérisation pour faire un copolymère de composition homogène en composition.

Le composé allylique peut également être ajouté en cours de polymérisation.

Le dérivé allylique est ajouté de telle sorte que la composition du mélange de monomères fluorés et de dérivé allylique reste constante pendant toute la durée de la polymérisation.

L'ajout du mélange de monomères pour maintenir la pression est poursuivi suffisamment longtemps pour atteindre un extrait sec de l'ordre de 10 à 60 %, de préférence de 15 à 40 %.

Les monomères résiduaires volatiles peuvent être éliminés par dégazage.

La solution finale est extraite du réacteur et peut être conservée telle quelle. Elle peut encore être concentrée immédiatement ou ultérieurement de façon à obtenir la quantité d'extrait sec choisie pour l'utilisation du copolymère.

Les solvants choisis pour la réaction de copolymérisation doivent permettre de solubiliser le mélange des monomères tout en restant inertes vis à vis des autres composants réactionnels. Ils sont choisis de préférence parmi les acétates et les alcools. Parmi les acétates préférés l'acétate de butyle, d'isobutyle et d'éthyle sont particulièrement retenus. Lorsque le copolymère est préparé dans le but d'une application dans les formulations pour peinture ou vernis, l'acétate de butyle ou l'acétate d'isobutyle employé comme solvant lors de la copolymérisation permet d'obtenir directement, sans traitement ultérieur, une composition utilisable telle quelle après bien entendu l'ajout des additifs complémentaires habituels à ces types de formulation.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisopropyle ou de dicyclohexyle, le perpivalate de tertiobutyle ou de tertioamyle, l'azobisisobutyronitrile et l'azo-bis-2,2-diméthylvaléronitrile.

Compte tenu de l'effet d'agent de transfert des solvants et des initiateurs cités, les masses moléculaires des polymères obtenus sont relativement faibles.

Lorsque le copolymère réticulable selon l'invention doit être utilisé comme base dans la formulation pour peinture ou vernis il peut, comme déjà signalé, être utilisé tel quel dans son milieu solvant réactionnel initial. Il peut également être plus ou moins concentré et remis en solution dans un solvant mieux adapté au type de peinture ou vernis souhaité. Tel quel, le copolymère en milieu solvant donne une solution transparente. A cette solution peuvent être ajoutés les additifs souhaités tels que pigments, charges, solvants, diluants, agent absorbant les ultra-violets, catalyseurs, agent stabilisant ou encore agent de durcissement améliorant la réaction de durcissement par réticulation à chaud. Parmi les agents de durcissement les plus connus peuvent être cités la mélamine-formol, les isocyanates, les polyamides, les acides organiques ou leurs anhydrides. La température de réticulation de ces copolymères est généralement comprise entre 0 et 260°C et dépend essentiellement de la nature chimique du durcisseur ou des conditions de mise en oeuvre

Les exemples suivants illustrent l'invention sans toutefois la limiter.

## EXEMPLE 1

Dans un autoclave de 3,3 l muni d'une agitation efficace on introduit après dégazage sous vide, 2 litres d'acétate d'éthyle. L'autoclave est porté à une température de 70°C. A cette température on ajoute 609 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 20,6 g. de 3-allyloxy 1-2 propane diol, puis 11 g. de perpivalate de tertiobutyle.

Pour maintenir la pression à 20 bars on ajoute pendant 4 heures 435 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 41,6 g. de 3-allyloxy 1-2 propane diol.

Après 4 heures de polymérisation l'autoclave est dégazé et on vidange une solution transparente de copolymère dont l'extrait sec est de 26,5 %. Le copolymère contient des motifs fluorés provenant du fluorure de vinylidène, du tétrafluoroéthylène et du chlorotrifluoroéthylène dans les proportions molaires respectives de 81/13/7 déterminés par RMN (Résonance magnétique nucléaire) du Fluor 19. Le taux molaire de 3-allyloxy 1-2 propane diol dans le copolymère est de 4,3% molaire par rapport à la totalité des motifs fluorés. La viscosité inhérente du copolymère est de 0,122 dl/g.

## EXEMPLE 2

Dans un autoclave de 3,3 l muni d'une agitation efficace on introduit après dégazage sous vide, 2 litres d'acétate de butyle. L'autoclave est porté à une température de 70°C. A cette température on ajoute 491g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 40,8 g. de 3-allyloxy 1-2 propane diol, puis 20 g. de perpivalate de tertiobutyle.

Pour maintenir la pression à 20 bars on ajoute pendant 6 heures 360 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 41,6 g. de 3-allyloxy 1-2 propane diol.

Après 6 heures de polymérisation l'autoclave est dégazé et on vidange une solution transparente de copolymère dont l'extrait sec est de 19 %. Le copolymère contient des motifs fluorés provenant du fluorure de vinylidène, du tétrafluoroéthylène et du chlorotrifluoroéthylène dans les proportions molaires respectives de 82/12/7 déterminés par RMN du Fluor 19. Le taux molaire de 3-allyloxy 1-2 propane diol dans le copolymère est de 8,6 % molaire par rapport à la totalité des motifs fluorés. La viscosité inhérente du copolymère est de 0,067 dl/g.

EXEMPLE 3

Dans un autoclave de 3,3 l muni d'une agitation efficace on introduit après dégazage sous vide, 2 litres d'acétate d'éthyle. L'autoclave est porté à une température de 50°C. A cette température on ajoute 890 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 40,8 g. de 3-allyloxy 1-2 propane diol, puis 10 g. de perdicarbonate de cyclohexyle.

Pour maintenir la pression à 20 bars on ajoute pendant 5 heures 230 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 21 g. de 3-allyloxy 1-2 propane diol.

Après 5 heures de polymérisation l'autoclave est dégazé et on vidange une solution transparente de copolymère dont l'extrait sec est de 20,8 %. Le copolymère contient des motifs fluorés provenant du fluorure de vinylidène, du tétrafluoroéthylène et du chlorotrifluoroéthylène dans les proportions molaires respectives de 82/12,5/6,5 déterminés par RMN du Fluor 19. Le taux molaire de 3-allyloxy 1-2 propane diol dans le copolymère est de 4,5% molaire par rapport à la totalité des motifs fluorés. La viscosité inhérente du copolymère est de 0,207 dl/g.

EXEMPLE 4

Dans un autoclave de 3,3 l muni d'une agitation efficace on introduit après dégazage sous vide, 2 litres d'acétate d'éthyle. L'autoclave est porté à une température de 50°C. A cette température on ajoute 1173 g. de mélange de monomères fluorés contenant du fluorure de vinylidène et du chlorotrifluoroéthylène pour atteindre 20 bars de pression dans les proportions molaires respectives de 85/15.

On ajoute ensuite 35,6 g. de 3-allyloxy 1-2 propane diol, puis 15 g. de perdicarbonate de cyclohexyle.

Pour maintenir la pression à 20 bars on ajoute pendant 6 heures 121 g. de mélange de monomères fluorés contenant du fluorure de vinylidène et du chlorotrifluoroéthylène dans les proportions molaires respectives de 85/15.

Simultanément on ajoute en continu sur la même durée de polymérisation 15,6 g. de 3-allyloxy 1-2 propane diol.

Après 6 heures de polymérisation l'autoclave est dégazé et on vidange une solution transparente de copolymère dont l'extrait sec est de 14 %. Le copolymère contient des motifs fluorés provenant du fluorure de vinylidène et du chlorotrifluoroéthylène dans les proportions molaires respectives de 70/30 déterminés par RMN du Fluor 19. Le taux molaire de 3-allyloxy 1-2 propane diol dans le copolymère est de 5,5 % molaire par rapport à la totalité des motifs fluorés. La viscosité inhérente du copolymère est de 0,161 dl/g.

EXEMPLE 5

Dans un autoclave de 3,3 l muni d'une agitation efficace on introduit après dégazage sous vide, 2 litres d'acétate d'éthyle. L'autoclave est porté à une température de 70°C. A cette température on ajoute 600 g. de mélange de monomères fluorés contenant du fluorure de vinylidène, du tétrafluoroéthylène et de l'hexafluoropropène pour atteindre 20 bars de pression dans les proportions molaires respectives de 75/15/10.

On ajoute ensuite 30,6 g. de 3-allyloxy 1-2 propane diol, puis 11 g. de perpivalate de tertiobutyle.

Pour maintenir la pression à 20 bars on ajoute pendant 6 heures 405 g. de mélange de monomères fluorés contenant du fluorure de vinylidène, du tétrafluoroéthylène et de l'hexafluoropropène dans les proportions molaires respectives de 75/15/10.

Simultanément on ajoute en continu sur la même durée de polymérisation 41,2 g. de 3-allyloxy 1-2 propane diol.

Après 6 heures de polymérisation l'autoclave est dégazé et on vidange une solution transparente de copolymère dont l'extrait sec est de 25 %. Le copolymère contient des motifs fluorés provenant du fluorure de vinylidène, du tétrafluoroéthylène et de l'hexafluoropropène dans les proportions molaires respectives de 78/16/6 déterminés par RMN du Fluor 19. Le taux molaire de 3-allyloxy 1-2 propane diol dans le copolymère est de 4,3 % molaire par rapport à la totalité des motifs fluorés. La viscosité inhérente du copolymère est de 0,181 dl/g.

EXEMPLE 6

Dans un autoclave de 3,3 l muni d'une agitation efficace on introduit après dégazage sous vide, 2 litres d'acétate d'éthyle. L'autoclave est porté à une température de 70°C. A cette température on ajoute 610 g. de mélange de monomères fluorés contenant du fluorure de vinylidène, du tétrafluoroéthylène et du chlorotrifluoréthylène pour atteindre 20 bars de pression dans les proportions molaires respectives de 79/15/6.

On ajoute ensuite 22 g. de 3-allyloxyéthanol, puis 15 g. de perpivalate de tertiobutyle.

Pour maintenir la pression à 20 bars on ajoute pendant 6 heures 430 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 48 g. de 3-allyloxyéthanol.

Après 6 heures de polymérisation l'autoclave est dégazé et on vidange une solution transparente de copolymère dont l'extrait sec est de 26 %. Le copolymère contient des motifs fluorés provenant du fluorure de vinylidène, du tétrafluoroéthylène et du chlorotrifluoroéthylène dans les proportions molaires respectives de 81/12/7 déterminés par RMN du Fluor 19. Le taux molaire de 3-allyloxyéthanol dans le copolymère est de 6,1 % molaire par rapport à la totalité des motifs fluorés. La viscosité inhérente du copolymère est de 0,117 dl/g.

EXEMPLE 7

Dans un autoclave de 3,3 l muni d'une agitation efficace on introduit après dégazage sous vide, 2 litres d'acétate d'éthyle. L'autoclave est porté à une température de 70°C. A cette température on ajoute 609 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 19,1 g. d'allylglycidyle éther, puis 15 g. de perpivalate de tertiobutyle.

Pour maintenir la pression à 20 bars on ajoute pendant 6 heures 440 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 39,4 g. d'allylglycidyle éther.

Après 6 heures de polymérisation l'autoclave est dégazé et on vidange une solution transparente de copolymère dont l'extrait sec est de 25 %. Le copolymère contient des motifs fluorés provenant du fluorure de vinylidène, du tétrafluoroéthylène et du chlorotrifluoroéthylène dans les proportions molaires respectives de 81/13/6 déterminés par RMN du Fluor 19. Le taux molaire d'allylglycidyle éther dans le copolymère est de 4,3 % molaire par rapport à la totalité des motifs fluorés. La viscosité inhérente du copolymère est de 0,122 dl/g.

EXEMPLE 8

Par simple mélange des constituants on prépare le vernis suivant :

| | Parties Poids |
|---|---|
| copolymère fluoré de l'Exemple 1 contenant 4,3 M d'allyloxypropanediol et à 26,5 % d'extrait sec dans l'acétate d'éthyle | 100 |
| résine mélamine formol partiellement méthylée (90 % d'extrait sec dans l'isobutanol viscosité 7000 mPa.s) | 12,6 |

Ce vernis est appliqué à la barre de 100 µm sur un support aluminium chromaté puis étuvé, pendant 30 minutes à 130°C pour donner un film sec d'épaisseur 18 µm. La réticulation est appréciée par le test de résistance à la méthyléthylcétone dans lequel un coton imbibé de méthyléthylcétone (MEC) est frotté avec un mouvement de va et vient sur le film jusqu'à abrasion de ce dernier. Un nombre d'aller retour compris entre 50 et 100 est l'indice d'une bonne réticulation. Un nombre égal à 100 ou plus est l'indice d'une réticulation excellente.

La compatibilité du vernis est jugée par la transparence des films obtenus

| | |
|---|---|
| E = excellente | transparence totale |
| B = bonne | léger voile |
| M = mauvaise | film translucide |

Le film réalisé précédemment résiste à plus de 100 allers retours à la MEC, et, offre une bonne transparence.

EXEMPLE 9

Par simple mélange des constituants on prépare les vernis suivants :

| | 2A | 2B | 2C | 2D |
|---|---|---|---|---|
| copolymère fluoré de l'Exemple 2 (contenant 8,6 % molaire d'allyloxypropanediol et 19 % d'extrait sec dans l'acétate de butyle) | 100 | 100 | 100 | 100 |
| résine mélamine formol partiellement méthylée (viscosité 7000 mPa.s à 90 % dans l'isobutanol) | 7,0 | 7,0 | - | - |
| trimère de l'hexaméthylène diisocyanate (teneur NCO 22 %) | - | - | 7,3 | 7,3 |
| Dilaurate de dibutylétain | - | - | 0,05 | 0,05 |

Les vernis sont appliqués à la barre de 150 µm sur un support aluminium chromaté d'épaisseur 0,7 mm.

L'essai 2A est étuvé 30 minutes à 130°C.

L'essai 2B est étuvé de manière à obtenir une température minimale de plaque (PMT) de 250°C pendant 40 secondes.

L'essai 2C est laissé sécher à température ambiante pendant 30 jours.

L'essai 2D est étuvé pendant 30 minutes à 80°C puis laissé à température ambiante pendant 8 jours.

Les films présentent les caractéristiques suivantes :

| | 2A | 2B | 2C | 2D |
|---|---|---|---|---|
| Tenue à la MEC | > 100 | > 100 | > 100 | > 100 |
| Compatibilité | E | E | E | E |

EXEMPLE 10

Le copolymère de l'Exemple 2 est concentré jusqu'à obtention d'un extrait sec de 50 %.

On prépare une peinture dans les conditions suivantes :

On mélange 60,5 g. de solution de copolymère avec 28,3 g. de dioxyde de titane dans un disperseur à billes de manière à obtenir une pâte de broyage dont la finesse de broyage est inférieure à 10 µm.

On reprend 178 g. de cette pâte que l'on déconcentre avec 22,4 g. de résine de mélamine formol partiellement méthylée pour donner une peinture blanche dont la viscosité à la coupe Ford n° 4 est de 80 secondes.

On applique cette peinture blanche sur aluminium chromaté au raclet spirale de 100 µm puis on étuve pendant 30 minutes à 130°C pour obtenir un film sec de 22 µm. La peinture obtenue résiste à plus de 100 allers retours à la MEC, possède un brillant Gardner mesuré à 60° de 50 %, une adhérence classe 0 déterminée selon la norme NFT 30038 et n'est pas affectée par une exposition de 100 h. au Q.U.V. Le Q.U.V. est un appareil de vieillissement accéléré. Les effets du soleil sont reproduits au moyen de quatre tubes émettant des rayonnement UV. La température pendant l'exposition aux UV est de 63°C. Un dispositif de condensation d'eau permet de maintenir le taux d'humidité à 100 % d'humidité relative pendant la phase de condensation. La température de l'échantillon pendant la phase de condensation est de 50°C. On alterne les phases de condensation

et d'irradiation, chacune de 4 heures.

EXEMPLE 11

Par simple mélange des constituants on prépare le vernis de composition suivante (paries en poids) :

| | |
|---|---|
| copolymère fluoré de l'Exemple 3 (4,5 % molaire d'allyloxy propane diol à 20,8 % dans l'acétate d'éthyle) | 100 |
| résine de mélamine formol partiellement méthylée (viscosité 7500 mPa.s à 90 % dans isobutanol) | 5,7 |

Le vernis est appliqué à la barre de 150 µm sur support acier galvanisé d'épaisseur 0,8 mm puis étuvé 30 minutes à 130°C pour donner un film sec d'épaisseur 18 µm.

Ce film résiste à plus de 100 allers retours à la MEC et offre une excellente transparence.

EXEMPLE 12

La solution de copolymère de l'Exemple 3 est concentrée jusqu'à un extrait sec de 64 %. On mélange 516 g. de solution avec 186 g. d'un pigment bleu de cobalt et 41 g. d'éthyl3-éthoxypropionate dans un disperseur à billes de manière à obtenir une pâte de broyage dont la finesse de broyage est inférieure à 10 µm.

On reprend 148,6 g. de la base pigmentaire obtenue que l'on déconcentre avec 18,4 g. de résine mélamine formol partiellement méthylée et on ajuste à une viscosité de 80 secondes à la coupe Ford n° 4 en diluant avec 33 g. d'éthyl3-éthoxypropionate.

La peinture bleue obtenue est appliquée à la barre de 100 µm. sur une plaque d'acier galvanisé d'épaisseur 0,8 mm puis étuvée 30 secondes à 130°C pour obtenir un film sec de 22 µm.

Cette peinture résiste à plus de 100 allers retours à la MEC, possède un brillant Gardner de 40 %, une adhérence de classe 0 déterminée selon la norme NFT 30 038 et n'est pas affectée par une exposition de 1000 heures au QUV.

EXEMPLE 13

On prépare un vernis par simple mélange des constituants suivants :

| | 4A | 4B |
|---|---|---|
| copolymère fluoré de l'Exemple 4 (5,5 % molaire dans l'allyloxy propane diol et 14 % d'extrait sec dans l'acétate d'éthyle) | 100 | 100 |
| résine de mélamine formol partiellement méthylée | 3,9 | - |
| trimère de l'hexaméthylènediisocyanate | - | 3,5 |
| dilaurate de dibutylétain | - | 0,05 |

Les vernis sont appliqués à la barre de 150 µm sur un support aluminium chromaté d'épaisseur 0,7 mm.

L'essai 4A est étuvé pendant 30 minutes à 130°C pour donner un film sec d'épaisseur 16 µm.

L'essai 4B est étuvé pendant 30 minutes à 80°C puis laissé pendant 30 jours à température ambiante pour donner un film d'épaisseur 16 µm.

Les films présentent les caractéristiques suivantes :

| | 4A | 4B |
|---|---|---|
| tenue à la MEC | >100 | 95 |
| compatibilité | E | E |

EXEMPLE 14

Le copolymère précédent est concentré jusqu'à une solution d'extrait sec de 68,5 % dans l'acétate d'éthyle. On mélange 424 g. de solution de copolymère avec 272 g. de dioxyde de titane et 158 g. d'éthyl3-éthoxypropionate dans un disperseur à billes de manière à obtenir une pâte de broyage dont la finesse de broyage est inférieure à 10 μm.

On reprend 170,8 g. de cette pâte que l'on déconcentre avec 21,6 g. de résine mélamine formol et 7,8 g. d'éthyl3-éthoxypropionate pour donner une peinture blanche dont la viscosité à la coupe Ford n° 4 est de 85 secondes.

On applique cette peinture blanche sur une plaque d'aluminium chromaté d'épaisseur 0,7 mm au raclet spirale de 100 μm puis on étuve à 130°C pendant 30 minutes.

La peinture obtenue résiste plus de 100 allers retours à la MEC, possède du brillant Gardner mesuré à 60°C de 55 %, une adhérence de classe 0 déterminée selon la norme NFT 30 038 et n'est pas affectée par une exposition de 1000 heures au QUV.

EXEMPLE 15

On prépare un vernis par simple mélange des constituants suivants :

| | |
|---|---|
| copolymère fluoré de l'Exemple 5 (4,3 % molaire d'allyloxy propane diol et 25 % d'extrait sec dans l'acétate d'éthyle) | 100 |
| résine d'hexaméthoxyméthylmélamine (HMMM) | 2,7 |

Le vernis est appliqué à la barre de 125 μm sur un support acier galvanisé d'épaisseur 0,8 μm.

La plaque est étuvée de manière à obtenir une température minimale de plaque (PMT) de 250°C pendant 40 secondes et un film sec d'épaisseur 20 μm qui résiste à plus de 100 allers retours à la MEC et une bonne compatibilité avec le HMMM.

EXEMPLE 16

On prépare un vernis par simple mélange des constituants suivants :

| | 6A | 6B |
|---|---|---|
| copolymère fluoré de l'Exemple 6 (6,1 % molaire d'allyloxyéthanol et 26 % d'extrait sec dans l'acétate d'éthyle) | 100 | 100 |
| résine de mélamine formol partiellement méthylée | 9,6 | - |
| acide p. toluène sulfonique | 0,2 | - |
| trimère de l'hexaméthylènediisocyanate | - | 3,9 |
| dilaurate de dibutylétain | - | 0,05 |

Les vernis sont appliqués à la barre de 150 µm sur un support aluminium chromaté d'épaisseur 0,7 mm.

L'essai 6A est étuvé pendant 30 minutes à 150°C pour donner un film d'épaisseur 24 µm.

L'essai 6B est étuvé pendant 30 minutes à 80°C puis laissé pendant 30 jours à température ambiante pour donner un film sec d'épaisseur 22 µm.

Les films présentent les caractéristiques suivantes :

| | 6A | 6B |
|---|---|---|
| tenue à la MEC | >100 | >100 |
| compatibilité | E | E |

EXEMPLE 17

Le copolymère précédent est concentré jusqu'à une solution d'extrait sec de 55 % dans l'acétate d'éthyle.

On mélange 200 g. de cette solution de copolymère avec 102,8 g. d'un pigment blanc de dioxyde de titane et 38,6 g. d'éthyl3-éthoxypropionate dans un disperseur à billes de manière à obtenir une pâte de broyage dont la finesse de broyage est inférieure à 10 µm.

On reprend 170,7 g. de la base pigmentaire obtenue que l'on déconcentre avec 20,4 g. de résine mélamine formol partiellement méthylée, 0,4 g. d'acide p.toluène sulfonique et on ajuste à une viscosité de 80 secondes à la coupe Ford n° 4 en diluant avec 40 g. d'éthyl3-éthoxypropionate.

La peinture blanche est appliquée à la barre de 100 µm sur une plaque d'aluminium chromatée d'épaisseur 0,7 mm puis étuvée pendant 30 minutes à 150°C pour donner un film sec d'épaisseur 24 µm. La peinture blanche obtenue résiste plus de 100 allers retours à la MEC, possède un brillant Gardner mesuré à 60° de 45 %, une adhérence de classe 0 déterminée selon la norme NFT 30 038 et n'est pas affectée par une exposition de 1000 heures au QUV.

EXEMPLE 18

On prépare un vernis par simple mélange des constituants suivants :

| | |
|---|---|
| copolymère fluoré de l'Exemple 7 (4,3 % molaire d'allylglycidyl éther et 25 % d'extrait sec dans l'acétate d'éthyle) | 200 |
| 4,4' diaminodiphényl méthane | 1,4 |

Le vernis est appliqué, par pistoletage pneumatique sur une plaquette de polypropylène préalablement revêtue d'un primaire à base de paraffine chlorée.

La plaquette est étuvée pendant 45 minutes à 60°C pour obtenir un film sec d'épaisseur 16 µm puis laissée à température ambiante pendant 8 jours.

Le film présente une adhérence classe 0 sur le support telle que déterminée par la norme NFT 30 038 et résiste plus de 100 allers retours à la MEC.

## Revendications

1. Copolymère durcissable contenant les restes de copolymérisation d'un monomère fluoré et d'un éther allylique hydroxylé et/ou époxydé caractérisé en ce que :

   a) les restes de monomère fluoré proviennent pour 100 moles de monomères fluorés de l'association de 50 à 98 moles de fluorure de vinylidène et de 2 à 50 moles d'au moins un des monomères fluorés choisi parmi le tétrafluoroéthylène, le chlorotrifluoroéthylène et l'hexafluoropropène ou d'un mélange d'au moins deux de ces trois monomères,

   b) les restes de l'éther allylique proviennent de 2 à 20 moles pour 100 moles de l'ensemble des monomères fluorés d'un des composés de la formule :

   $$CH_2 = \underset{\displaystyle R_1}{\underset{|}{C}} - CH_2 - R_2\ (-\underset{\displaystyle R_3}{\underset{|}{CH}}-)_n\ (-\underset{\displaystyle R_4}{\underset{|}{CH}})_m - R$$

   R étant :

   $$CH_2OH \text{ ou } \underset{\displaystyle O}{\underset{\backslash\ /}{CH-CH_2}}$$

   $R_1$ étant : H ou $CH_3$
   $R_2$ étant : $O-(X)_p$,

   $$O-CH_2-CH_2-C\begin{smallmatrix} / R_5 \\ \backslash R_6 \end{smallmatrix} \quad , \quad O-CH_2-C\begin{smallmatrix} / R_5 \\ \backslash R_6 \end{smallmatrix}$$

   avec "p" un nombre choisi de 0 à 3 et X étant $(CH_2)_q$-O avec "q" un nombre choisi de 1 à 3
   $R_5$ et $R_6$, identiques ou différents, étant H, $CH_2OH$, $CH_2$-$CH_2OH$, $CH_3$
   $R_3$ et $R_4$ identiques ou différents étant H ou OH

   et "n" et "m", identiques ou différents étant des nombres choisis de 0 à 2.

2. Copolymère durcissable selon la revendication 1 caractérisé en ce que sa viscosité intrinsèque en solution dans la diméthyleformamide à 25° C en concentration de 1 g/dl est comprise dans les valeurs de 0,03 à 0,4 dl/g.

3. Copolymère durcissable selon l'une des revendications 1 ou 2 caractérisé en ce qu'il se présente en solution dans un solvant organique.

4. Solution selon la revendication 3 caractérisée en ce que le solvant est un alcool ou un acétate.

5. Procédé de fabrication de copolymère durcissable à base de monomère fluoré et d'éther allylique hydroxylé ou époxydé caractérisé en ce qu'on copolymérise pour 100 moles de l'ensemble des monomères fluorés :

- 50 à 98 moles de fluorure de vinylidène et
- 2 à 50 moles de tétrafluoroéthylène et/ou de chlorotrifluoroéthylène et/ou d'hexafluoropropène,
- 2 à 20 moles d'éther allylique tel que défini dans la revendication 1 et pour 100 moles de l'ensemble des monomères fluorés.

**6.** Procédé selon la revendication 5 caractérisé en ce que la copolymérisation s'effectue en solution dans un solvant.

**7.** Procédé selon la revendication 6 caractérisé en ce que le solvant est un alcool ou un acétate.

**8.** Procédé selon l'une des revendications 5 à 7, caractérisé en ce que la température de copolymérisation est comprise entre 30 et 120° C.

**9.** Procédé selon l'une des revendications 5 à 8, caractérisé en ce que la pression de copolymérisation est comprise entre 10 et 80 bars.

**10.** Peinture ou vernis constitué de copolymère durcissable selon l'une des revendications 1 à 4 en solution dans un solvant.

## Patentansprüche

**1.** Härtbares Copolymer, das Reste aus der Copolymerisation eines fluorierten Monomers und eines hydroxylierten und/oder epoxidierten Allylethers enthält, dadurch gekennzeichnet, daß

a) die Reste des fluorierten Monomers aus der Assoziation von 50 bis 98 mol-Prozent Vinylidenfluorid und 2 bis 50 mol-Prozent mindestens eines fluorierten Monomers aus der Gruppe: Tetrafluorethylen, Chlortrifluorethylen und Hexafluorpropylen oder einer Mischung aus mindestens zwei dieser drei Monomere stammen,

b) die Reste des Allylethers aus 2 bis 30 mol-Prozent Allylether, bezogen auf die Gesamtmenge an fluorierten Monomeren, stammen und folgender Formel entsprechen:

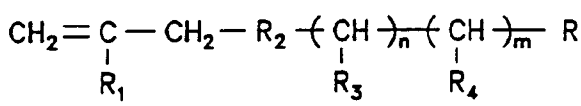

in der R = $-CH_2OH$ oder

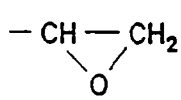

$R_1$ = -H oder $-CH_3$ und

$R_2 = -O-(X)_p-$,

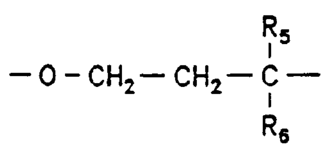

oder

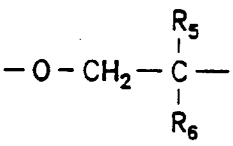

wobei p eine Zahl zwischen 0 und 3 ist,
X den Rest $-(CH_2)_q-O-$ darstellt, in dem q eine Zahl zwischen 1 und 3 ist,
$R_5$ und $R_6$ gleich oder verschieden sein können und $-H$, $-CH_2OH$, $-CH_2-CH_2OH$ oder $-CH_3$ darstellen,
$R_3$ und $R_4$ gleich oder verschieden sein können und -H oder -OH darstellen und n und m, gleich oder verschieden, Zahlen zwischen 0 und 2 sein können.

2. Härtbares Copolymer nach Anspruch 1, dadurch gekennzeichnet, daß seine intrinsische Viskosität in Dimethylformamid-Lösung bei 25°C und einer Konzentration von 1 g/dl zwischen 0,03 und 0,4 dl/g beträgt.

3. Härtbares Copolymer nach einem der Ansprüche 1 oder 2, dadurch gekennzeichnet, daß es in einem organischen Lösungsmittel gelöst vorliegt.

4. Lösung nach Anspruch 3, dadurch gekennzeichnet, daß das Lösungsmittel ein Alkohol oder ein Acetat ist.

5. Verfahren zur Herstellung eines härtbaren Copolymers auf der Basis fluorierter Monomere und hydroxylierter oder epoxidierter Allylether, dadurch gekennzeichnet, daß pro hundert mol Gesamtmenge an fluorierten Monomeren
   - 50 bis 98 mol Vinylidenfluorid und
   - 2 bis 50 mol Tetrafluorethylen und/oder Chlortrifluorethylen und/oder Hexafluorpropylen sowie
   - 2 bis 20 mol Allylether wie in Anspruch 1 definiert und ebenfalls auf 100 mol Gesamtmenge an fluorierten Monomeren bezogen
     copolymersiert werden.

6. Verfahren nach Anspruch 5, dadurch gekennzeichnet, daß die Copolymerisation in Lösung durchgeführt wird.

7. Verfahren nach Anspruch 6, dadurch gekennzeichnet, daß das Lösungsmittel ein Alkohol oder ein Acetat ist.

8. Verfahren nach einem der Ansprüche 5 bis 7, dadurch gekennzeichnet, daß die Temperatur, bei der die Copolymerisation durchgeführt wird, zwischen 30 und 120°C beträgt.

9. Verfahren nach einem der Ansprüche 5 bis 8, dadurch gekennzeichnet, daß der Druck, bei dem die Copolymerisation durchgeführt wird, zwischen 10 und 80 bar beträgt.

10. Farbe oder Lack, bestehend aus einem härtbaren Copolymer nach einem der Ansprüche 1 bis 4 in Lösung.

## Claims

1. A hardenable copolymer containing the copolymerization residue of a fluorinated monomer and a hydroxylated and/or epoxy allyl ether,
   **characterised in that**
   a) the residue of a fluorinated monomer originates, for 100 moles of fluorinated monomers, from the association of 50 to 98 moles of vinylidene fluoride and of 2 to 50 moles of at least one of the fluorinated monomers chosen from tetrafluoroethylene, chlorotrifluoroethylene and hexafluoropropene or a mixture of at least two of these three monomers,
   b) the residue of allyl ether originates from 2 to 20 moles for 100 moles of all the fluorinated monomers of one of the constituents having the formula:

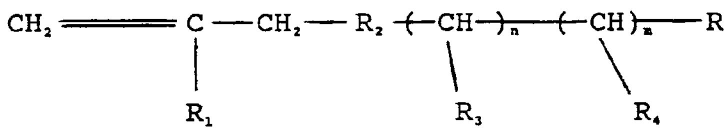

R being : $CH_2OH$ or

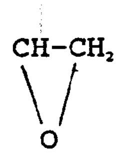

$R_1$ being : H or $CH_3$
$R_2$ being :
O - $(X)_p$,

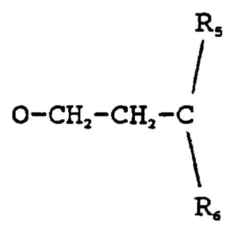 , 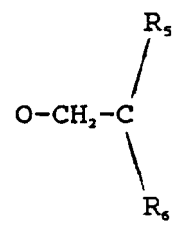

with "p" being a chosen number from 0 to 3
and X being $(CH_2)_q$-O with "q" being a chosen number of from 1 to 3
$R_5$ and $R_6$, which are identical or different, being H, $CH_2OH$, $CH_2$-$CH_2OH$, $CH_3$
$R_3$ and $R_4$, which are identical or different, being H or OH
and "n" and "m", which are identical or different, being chosen numbers from 0 to 2.

2. A hardenable copolymer according to Claim 1,
**characterised in that** its intrinsic viscosity in solution in dimethylformamide at 25 ° in a concentration of 1 g/dl is within the values of 0.03 to 0.4 dl/g.

3. A hardenable copolymer according to one of Claims 1 or 2,
**characterised in that** it is in solution in an organic solvent.

4. A solution according to Claim 3,
**characterised in that** the solvent is an alcohol or an acetate.

5. A process for the production of a hardenable copolymer on a base of a fluorinated monomer and a hydroxylated or epoxy allyl ether,
**characterised in that** for 100 moles of all the fluorinated monomers
   - 50 to 98 moles of vinylidene fluoride and
   - 2 to 50 moles of tetrafluoroethylene and/or chlorotrifluoroethylene and/or hexafluoropropene
   - 2 to 20 moles of allyl ether as defined in Claim 1 and for 100 moles of all the fluorinated monomers are copolymerized.

6. A process according to Claim 5,
**characterised in that** copolymerization is performed in solution in a solvent.

7. A process according to Claim 6,
**characterised in that** the solvent is an alcohol or an acetate.

8. A process according to one of Claims 5 to 7,

**characterised in that** the copolymerization temperature is between 30 and 120 °C.

9. A process according to one of Claims 5 to 8,
**characterised in that** the copolymerization pressure is between 10 and 80 bars.

10. A paint or varnish formed of a hardenable copolymer according to one of Claims 1 to 4 in solution in a solvent.